# EUROPÄISCHE PATENTANMELDUNG

(11) **EP 1 452 463 A1**
(43) Veröffentlichungstag der Anmeldung: **01.09.2004**
(21) Anmeldenummer: 04090016.9
(22) Anmeldetag: 16.01.2004
(51) Int. Cl.: B65G 17/00, B65G 21/22, B65G 35/06, B64F 1/36

(54) **Behältertransportsystem und Behälter zum Transport von Stückgut**

(30) Priorität: 27.02.2003 DE 10308657
(71) Anmelder: SIEMENS AKTIENGESELLSCHAFT, 80333 München (DE)
(72) Erfinder: Brixius, Wolfgang, 91077 Neunkirchen A.Br (DE); Gräfer, Dominik, 44265 Dortmund-Wellinghofen (DE); Hoene, Albrecht, 93138 Lappersdorf (DE); Syndikus, Andreas, 90559 Burgthann (DE)

(57) **Zusammenfassung**

Die Erfindung betrifft ein Behältertransportsystem zum Transport von Stückgut, insbesondere von Gepäckstücken, zwischen dem mindestens einen Aufgabe- und dem mindestens einen Abgabeort eines Behälterförderers, auf dem die einzelnen, zur Aufnahme der zu transportierenden Stückgutteile entsprechend geformten Behälter (1) aufliegend fortbewegbar sind. Aufgabe der vorliegenden Erfindung ist es, ein Behältertransportsystem mit einem von Röntgenstrahlen durchleuchtbaren Behälter (1), insbesondere für Gepäckstücke zu schaffen, der kontrolliert in dem Behältertransportsystem in jeder Richtung, auch in Weichen- und Kurvenbereichen, exakt geführt ist. Erfindungsgemäß wird ein Behältertransportsystem vorgeschlagen, bei dem jeder Behälter (1) vollständig aus einem formstabilen, abriebfesten, flammhemmenden und durchleuchtungsfähigen Kunststoff geformt ist und in auf dessen Unterseite in Transportrichtung (T) verlaufende Führungs- und/oder Antriebsflächen (4) eingeformt sind, die mit den Behälter (1) führenden und/oder antreibenden Führungs- und/oder Antriebsmitteln (4b) zusammenwirken.

## Beschreibung

Die Erfindung betrifft ein Behältertransportsystem und einen Behälter zum Transport von Stückgut, insbesondere von Gepäckstücken, zwischen dem mindestens einen Aufgabe- und dem mindestens einen Abgabeort eines Behälterförderers, auf dem die einzelnen, zur Aufnahme der zu transportierenden Stückgutteile entsprechend geformten Behälter aufliegend fortbewegbar sind.

Aus dem europäischen Patent EP 0 456 297 B1 ist ein Fördersystem für Stückgut, insbesondere für Gepäck bekannt, bei dem die einzelnen Gepäckstücke jeweils in einem eigenen Behälter transportiert werden. Die die Gepäckstücke aufnehmenden Behälter sind innerhalb des Fördersystems einem endlos umlaufenden Sortierförderer zuführbar, der im wesentlichen aus einer Vielzahl von in Förderrichtung hintereinander angeordneten und miteinander gekoppelten Fahrwerken besteht, auf denen jeweils eine um eine in Fahrtrichtung verlaufende Horizontalachse seitlich verschwenkbare Tragplatte gelagert ist. Auf der Tragplatte sind Halteelemente vorgesehen, die den Behälter auf der Tragplatte lösbar halten. Mit Hilfe der seitlich schwenkbaren Tragplatte können die so auf der Tragplatte befestigten Behälter mit den Gepäckstücken an vorgewählten Zielstellen seitlich so weit gekippt werden, dass die Gepäckstücke aus den Behältern herausrutschen.

Für den Fall, dass die Gepäckstücke im Zusammenhang mit einer Flugabfertigung nach gefährlichen Stoffen wie z. B.

Sprengstoff durchleuchtet werden müssen, kann es hinderlich sein, wenn der Behälter aus Metall ist bzw. große Bereiche aus Metall aufweist. Ein zuvoriges Entladen des Behälters für den Durchleuchtvorgang des Gepäcks wäre somit unabdingbar.

Für die Verwendung in Förderanlagen eines Flughafens sind Behälter bekannt, die aus einem wannenförmigen Oberteil aus Kunststoff bestehen, das zum Schutz des Behälters in ein komplementär ausgebildetes wannenförmiges Unterteil aus Metall eingesteckt ist. Das Oberteil ist mit dem aus Metall ausgebildeten Unterteil verschraubt und weist Führungsflächen oder Führungsstifte auf, die mit dem Förderer zusammenwirken. Derartige Behälter eignen sich wegen des Metallanteils nur begrenzt für die vorgeschriebenen und notwendigen Durchleuchtvorgänge in Bezug auf die Gepäckstücke. In der Regel ist ein Umladen des Gepäckstückes unumgänglich.

Ein anderes Behälterfördersystem ist unter dem Namen CrisBag bekannt geworden. Die dort verwendeten Behälter sind zwar mit Röntgenstrahlen durchleuchtbar, werden aber weder in vertikalen konvexen Kurven noch in horizontalen Kurven, Weichen oder Kreuzungen exakt geführt. Dementsprechend unterliegen die Behälter und die Förderelemente einem starkem Verschleiß. Die Anlage ist weiter sehr laut, weil die Behälter an Führungen des Fördersystems anstoßend geleitet werden.

Der vorliegenden Erfindung liegt die Aufgabe zugrunde, diesen Nachteil zu vermeiden und ein Behältertransportsystem mit einem von Röntgenstrahlen durchleuchtbaren Behälter, insbesondere für Gepäckstücke oder dergl. Stückgut zu schaffen, der kontrolliert in dem Behältertransportsystem in jeder Richtung, auch in Weichen- und Kurvenbereichen, exakt geführt ist.

Zur Lösung der Aufgabe wird ein Behältertransportsystem vorgeschlagen, das dadurch gekennzeichnet ist, dass jeder Behälter vollständig aus einem formstabilen, abriebfesten, flammhemmenden und durchleuchtungsfähigen Kunststoff geformt ist und in dessen Unterseite in Transportrichtung verlaufende Führungs- und/oder Antriebsflächen eingeformt sind, die mit den Behälter führenden und/oder antreibenden Führungsund/oder Antriebsmittel zusammenwirken. Anders als beim Stand der Technik besteht der komplette Behälter nach der Erfindung aus einen durchleuchtbaren Kunststoff und ist mit in den Kunststoff eingeformten Führungs- und/oder Antriebsflächen versehen, die für die kontrollierte und stabile Führung des Behälters sorgen und einen verschleiß- und geräuscharmen Transport des Behälters in jeder Richtung innerhalb des Behältertransportsystems gewährleisten. Als Material für den Behälter wird ein bekannter feuerhemmender, formstabilen und abriebfester Kunststoff verwendet, wie er von verschiedenen Herstellern, z.B. Bayer unter der Bezeichnung Bayblend FR 110 ABS/PC, Cycoloy C2801 von GE, Stapron CCF202 von DSM, Ultrmid C3U PA66/6 von BASF, Rilsan MB3000 und 3001 PA11 von Atofina angeboten wird. Allen gemeinsam ist eine effektive Ordnungszahl kleiner 6,5, was eine Durchleuchtung der Behälter mit Röntgenstrahlung sicherstellt.

In einer bevorzugten Ausgestaltung der Erfindung werden die Führungs- und/oder Antriebsflächen durch sich beidseitig der Behälterlängsmittelachse spiegelsymmetrisch erstreckende, einander zugewandte Seitenflächen einer in den Behälterboden eingeformten nutförmigen Vertiefung gebildet, an die die Führungs- und/oder Antriebsmittel mindestens bereichsweise anlegbar sind. Mittels dieser in den Behälterboden eingeformten Nut wird der Behälter zentral optimal in jeder Richtung geführt und wo erforderlich angetrieben, während der beidseitig der Nut verbleibende Behälterboden unmittelbar auf dem Förderer abgetragen wird. Dieser kann mit Bändern, Rollen oder anderen Fördermitteln bestückt sein, die beidseitig der nutförmigen Vertiefung den Behälter untergreifen.

Um den Behälter auch in Kurven, Weichen und Kreuzungsbereichen kontrolliert zu führen und anzutreiben, ist nach einen weiteren Merkmal der Erfindung vorgesehen, dass die Seitenflächen der nutförmigen Vertiefung spiegelsymmetrisch in einem dem Kurvenradius des Behälterförderers entsprechendem Radius derartig nach außen gekrümmt sind, dass deren größter Abstand in der Behältermitte liegt, und dass mindestens in Kurven-, Kreuzungsstrecken oder in Weichenbereichen am Behälterförderer vorgesehene Antriebsmittel, in die nutförmigen Vertiefung eingreifend, an mindestens einer der Seitenflächen kraft- oder formschlüssig zur Anlage kommen.

Alternativ können die Seitenflächen der nutförmigen Vertiefung spiegelsymmetrisch in einem dem Kurvenradius des Behälterförderers entsprechendem Radius nach innen gekrümmt sein. In beiden Fällen liegen in Bereichen gekrümmter Förderstrecken die Antriebsmittel jeweils an einer der beiden Seitenflächen der nutförmigen Vertiefung an und treiben und führen den Behälter durch die Kurve oder Weiche.

Erfindungsgemäß ist der Abstand der Seitenflächen voneinander in den in Transportrichtung vorderen und hinteren Bereichen der nutförmigen Vertiefung der Breite der eingreifenden Führungs- und/oder Antriebsmittel angepasst, wobei die nutförmige Vertiefung beidseitig nach außen stufenlos trichterförmig erweitert ist. Diese Erweiterung ist für die Einleitung der Kurvenfahrt des Behälters geometrisch erforderlich; der den Antriebsmittel angepasste Abstand der Seitenflächen der nutförmigen Vertiefung stellt sicher, das die Antriebsmittel reibschlüssig in die nutförmige Vertiefung eingreifen und den Behälter form- oder kraftschlüssig antreiben können.

In einer einfachen Ausgestaltung der Erfindung verlaufen die Seitenflächen der nutförmigen Vertiefung senkrecht zur Bodenfläche des Behälters. Dementsprechend sind die Antriebsmittel oder Führungsmittel zur Anlage an Bereiche dieser Seitenflächen senkrecht orientiert. Diese Ausführung hat aber den Nachteil, dass beim Durchleuchten der Behälter die senkrechten Kanten der Seitenflächen als strichförmige Schatten auf dem Bildschirm abgebildet werden und dadurch die Erkennbarkeit des Gepäckinhaltes erschweren. Dies kann verhindert werden, wenn die Seitenflächen und auch andere Kanten des Behälters geneigt zur Durchleuchtungsebene verlaufen. Deshalb wird nach einem anderen Merkmal der Erfindung vorgeschlagen, dass die Seitenflächen der nutförmigen Vertiefung spiegelsymmetrisch derart gegeneinander geneigt sind, dass sich die nutförmigen Vertiefung nach unten aufweitet.

Dadurch, dass die Oberfläche des Behälters zur Aufnahme des Stückgutes symmetrisch zur Behälterlängsachse muldenförmig nach unten gekrümmt ist, wird gleichzeitig eine sichere Auflage des Stückgutes auf dem Behälter geschaffen.

In einer besonders günstigen Ausgestaltung der Erfindung ist vorgesehen, dass jede Seitenfläche der nutförmigen Vertiefung mit mindestens einer in Längsrichtung der Nut verlaufenden Stufe versehen ist, wobei jeweils die der Nutöffnung nahen Seitenwandbereiche in einem Radius gekrümmt sind, der dem Kurvenradius entspricht, und wobei die an den Nutgrund anschließenden Seitenwandbereiche parallel zur Förderrichtung verlaufen, deren Abstand der Breite der eingreifenden Führungs- und/oder Antriebsmittel angepasst ist. Diese Stufe ermöglicht eine optimale Führung sowohl bei Kurvenfahrt, wie auch bei Geradeausfahrt des Behälters. Die untere im Nutgrund liegende Stufe dient dabei der Geradeausführung und kann mit parallelen Seitenwandbereichen versehen sein, während die der Nutöffnung nahe Stufe nach innen oder außen gemäß dem Kurvenradius gekrümmt ist, so dass sich die Führungsund/oder Antriebsmittel an mindestens eine der Seitenflächen anlegen können.

Die Führungs- und/oder Antriebsmittel sind erfindungsgemäß fliegend gelagerte und in die Nut eingreifende Kegel- oder Zylinderrollen, die in Förderrichtung hintereinander in mindestens einer Reihe angeordnet sind, wobei jede Rolle an mindestens einer der Seitenwände der nutförmigen Vertiefung anlegbar sind.

Um eine einwandfreie Führung und einen entsprechenden Antrieb zu erhalten, sind in der Kurve des Förderers die in die Nut eingreifenden Kegel- oder Zylinderrollen auf einem Kreisbahnabschnitt angeordnet, dessen Radienmittelpunkt auf der gemeinsamen Achse liegt, die durch den Radienmittelpunkt der Kurve und den Radienmittelpunkt einer Seitenflächen der nutförmigen Vertiefung verläuft.

Die Führungs- und/oder Antriebsmittel in einer Kurve des Förderers bestehen erfindungsgemäß aus in zwei parallelen Reihen angeordneten Kegelrädern, die derartig angeordnet sind, das sich die Verlängerungen der Kegelachsen aller Kegelräder einer Reihe und die Verlängerungen der Kegelflanken in jeweils einem Punkt schneiden, der wie der Schnittpunkt der Kegelräder der anderen Reihe auf der gemeinsamen Kurvenmittelpunktsachse liegt. Dadurch wird eine schlupffreie und mechanisch günstige Einleitung der Antriebsleistung ebenso erreicht, wie eine einwandfreie Führung des Behälters.

Erfindungsgemäß liegen die Mantellinien jeweils einer Rollenreihe auf einer Kreisbahn, die parallel zu mindestens einer der Seitenwände verläuft, wobei mindestens eine der Reihen von Rollen von einem Antriebsband umschlungen ist, welches an einer der Seitenwände anlegbar ist, während die andere Reihe der Rollen im Kontakt mit mindestens Bereichen der gegenüberliegenden Seitenfläche steht.

Nach einer weiteren günstigen Ausgestaltung der Erfindung weist das Gehäuse des Behälters mindestens einen geschlossenen Hohlraum auf, der wie an sich bekannt ausgeschäumt und/oder mit einem Feuerlöschmittel gefüllt ist. Der Schaum dämpft die Geräuschentwicklung des Förderers deutlich und wirkt der Brandgefahr entgegen.

Vorzugsweise sind an den Außenkanten des in einem Behältertransportsystem der Erfindung operierenden Behälters Metallelemente angeordnet, die mit an der Förderstrecke installierten induktiven Näherungssensoren zusammenwirken. Mit diesen Sensoren kann die Position eines jeden Behälters in dem Behältertransportsystem jederzeit bestimmt werden, ohne die Durchleuchtbarkeit des Behälters negativ zu beeinflussen.

Besonders günstig ist, wenn nach einem weiteren Merkmal der Erfindung zur Identifizierung des Behälter im Behältertransportsystem Transponder vorgesehen sind, die außerhalb des Sichtbereiches der Durchleuchtungssysteme in den Behälter eingelassen sind. Diese Transponder können nach einer weiteren Ausgestaltung der Erfindung durch eine Metallabdeckung gegen Röntgenstrahlung abgedeckt sein.

Die Erfindung stellt einen problemlos mit Röntgenstrahlen durchleuchtbaren Behälter zur Verfügung, der vermittels seiner konstruktiven Ausbildung in jeder Förderrichtung kontrolliert führbar ist. Die an sich geringe Geräuschemission durch die exakte Führung des Behälters lässt sich durch das Ausschäumen des Behälters noch weiter reduzieren. Durch die Führung des Behälters im Fördersystem lässt sich aber auch der Verschleiß minimieren. Die Identifizierung des Behälters im Fördersystem mittels Transpondern, die die Durchleuchtbarkeit nicht stören, ist funktionssicher und effektiv. Durch die verwendeten Kunststoffe ist der Behälter gut durchleuchtbar, flammsicher, bruchbeständig, lärmdämmend und verschleißfest.

Ein Anwendungsbeispiel der Erfindung ist in der Zeichnung dargestellt und wird nachfolgend beschrieben. Es zeigt:
- Figur 1: einen erfindungsgemäßen Behälter dreidimensional dargestellt,
- Figur 2: das Antriebsprinzip des Behälters gemäß Fig. 1 (Blick von unten),
- Figur 3: eine andere Konfiguration des Behälters (Blick von oben und von unten),
- Figur 4: der Behälter mit den Führungs- und/oder Antriebsmitteln in vergrößerter Darstellung,
- Figur 5: die geometrische Anordnung der als Kegelräder ausgebildeten Führungs- und/oder Antriebsmittel,
- Figur 6: eine alternative Ausbildung der Führungs- und/oder Antriebsflächen und
- Figuren 7, 8: weitere alternative Ausbildungen der Führungs- und/oder Antriebsflächen.

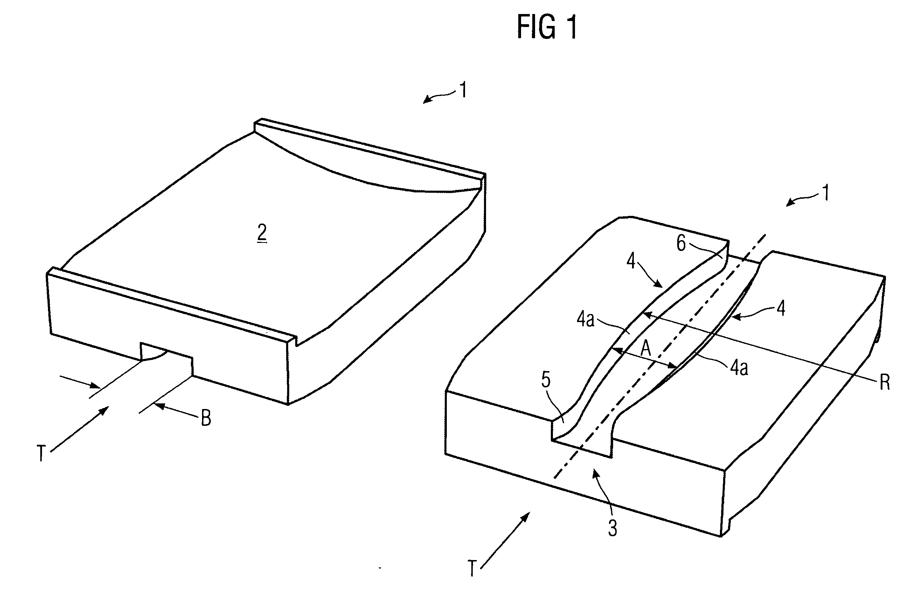

In Figur 1 ist ein Behälter 1 des Behältertransportsystems schematisch dargestellt, wie er in Flughafen-Gepäckförderanlagen zum Transportieren von Gepäckstücken Verwendung findet. In der linken Darstellung der Figur 1 ist der Behälter 1 perspektivisch von oben und in der rechten Darstellung perspektivisch von unten gesehen dargestellt. Der Behälter 1 hat auf seiner Oberseite eine nach innen gewölbte Fläche 2, welche dazu dient, das Gepäckstück sicher aufzunehmen und auch bei Kurvenfahrten stabil zu halten.

Auf der Unterseite des Behälters 1 sind die für die Führung und den Antrieb des Behälters 1 relevanten Führungs- und/oder Antriebsflächen 4 dargestellt, die mit den später noch beschriebenen Führungs- und/oder Antriebsmitteln 4b zusammenwirken.

In den Behälterboden ist eine nutförmige Vertiefung 3 eingeformt, deren Seitenflächen 4a als Führungs- und/oder Antriebsflächen 4 spiegelsymmetrisch zur Behälterlängsachse in einem dem Kurvenradius R des Behälterförderers entsprechenden Radius derartig nach außen gekrümmt sind, dass deren größter Abstand A näherungsweise in der Mitte liegt. Der Abstand B der Seitenflächen 4a in den in Transportrichtung T vorderen und hinteren Bereichen 5 und 6 ist hinsichtlich des lichten Abstandes der Breite der dort eingreifenden, später noch beschriebenen Führungs- und/oder Antriebsmitteln 4b angepasst, wobei die nutförmige Vertiefung 3 beidseitig von den Bereichen 5 und 6 nach außen stufenlos trichterförmig erweitert ist. Der Behälter 1 besteht vollständig aus einem formstabilen, abriebfesten, flammhemmenden und durchleuchtungsfähigen Kunststoff, kann aber auch aus entsprechendem Holzmaterial bestehen.

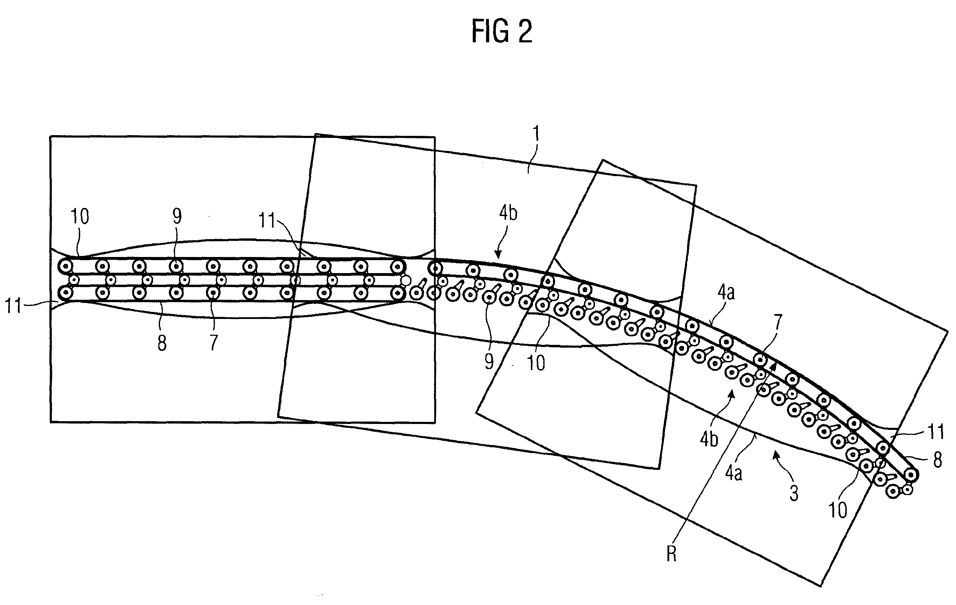

In Figur 2 ist der Antrieb und der Bewegungsablauf des Behälters in einer Förderbahnkurve des Behälterförderers schematisch dargestellt. Gezeigt ist eine Ansicht von unten auf den Behälter 1 und die nutförmige Vertiefung 3. Es sind in Figur 2 drei Behälterpositionen dargestellt, die der Behälter 1 nacheinander durchläuft. Erkennbar sind sowohl die nutförmige Vertiefung 3 wie auch das aus angetriebenen und führenden Rollen 7, 9 bestehende Führungs- und/oder Antriebsmittel 4b im Radius der Kurve R angeordnet, wobei die Rollen 7, 9 in zwei Reihen angeordnet und teilweise als Antriebsrollen 7 und teilweise als Führungsrollen 9 ausgebildet sind. Die Antriebsrollen 7 werden insgesamt von einem Antriebsband 8 umschlungen, welches an der äußeren Seitenfläche 4a der nutförmigen Vertiefung 3 anlegbar ist. Die Führungsrollen 9 auf der gegenüberliegenden Seite bewirken ein Andrücken des Antriebsbandes 8 durch Aufbringen einer Gegenkraft, wobei sie sich im Öffnungsbereich der nutförmigen Vertiefung 3 im Bereich 10 abstützen.

In der Figur 2 ist außerdem in der linken Hälfte erkennbar, dass ein ähnliches Antriebsmittel auch auf der Geraden der Förderstrecke verwendbar ist, wobei auch hier Antriebsbänder 8 um Antriebsrollen 7, sowie auch um Führungsrollen 9 geschlungen sind, die sich beidseitig an den Seitenflächen 4a der nutförmigen Vertiefung abstützen.

Wie in der Figur 2 ebenfalls erkennbar, ist die nutförmige Vertiefung 3 im Einlaufbereich des Behälters 1 trichterförmig erweitert (trichterförmige Erweiterung 11), und zwar durch einen Radius, der dem Radius des Führungs- und/oder Antriebsmittels 4b entspricht.

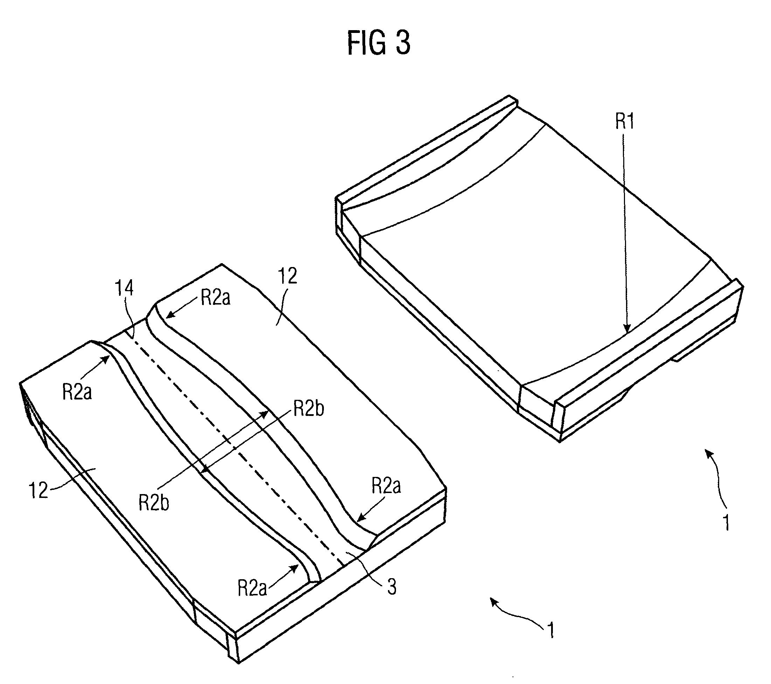

In Figur 3 ist eine andere Behälterausführung ebenfalls in einer Ansicht von oben (rechte Zeichnungshälfte) und von unten (linke Zeichnungshälfte) dargestellt. Auch hier ist, wie auf der rechten Zeichnungshälfte erkennbar, die Oberseite des Behälters 1, die dazu dient, das Gepäckstück aufzunehmen, mit einem Radius R1 nach innen gewölbt. Auf der Unterseite des Behälters 1 ist die nutförmige Vertiefung 3 erkennbar, die sowohl als Krafteinleitungsfläche für die Übertragung von kinetischer Energie als auch zur Aufnahme von Führungskräften für die horizontale und vertikale Führung verwendet wird. Die äußeren flachen Bereiche 12 der Behälterunterseite liegen auf der Bahn des Förderers auf, die aus Transportbändern, Transportrollen oder Kugelführungen gebildet sein kann. Die Seitenflächen 4a der nutförmigen Vertiefung 3 sind gegenüber der Vertikalen nach außen geneigt, und zwar spiegelsymmetrisch zur Behältermittelachse 14. Die gezeigten Radien R2b beschreiben den Verlauf der Kanten der Vertiefung 3 der trichterförmigen Erweiterung 11, die durch die Radien R2a geformt wird und dem geräusch- und verschleißarmen Einführen des Behälters 1 in den Kurvenbereich dient. Der durch die Radien R2b geformte Bauch der Seitenfläche 4a bildet in der Kurve die Gegenfläche zu den gegenüberliegenden Flächen R2a. Im Gegensatz zur Darstellung in Figur 1 sind die Seitenflächen 4a bei dieser Ausführungsform geneigt, was den Vorteil hat, dass beim Durchleuchten des Behälters die bei vertikaler Ausrichtung der Seitenfläche zu erkennenden Kanten nicht abgebildet werden.

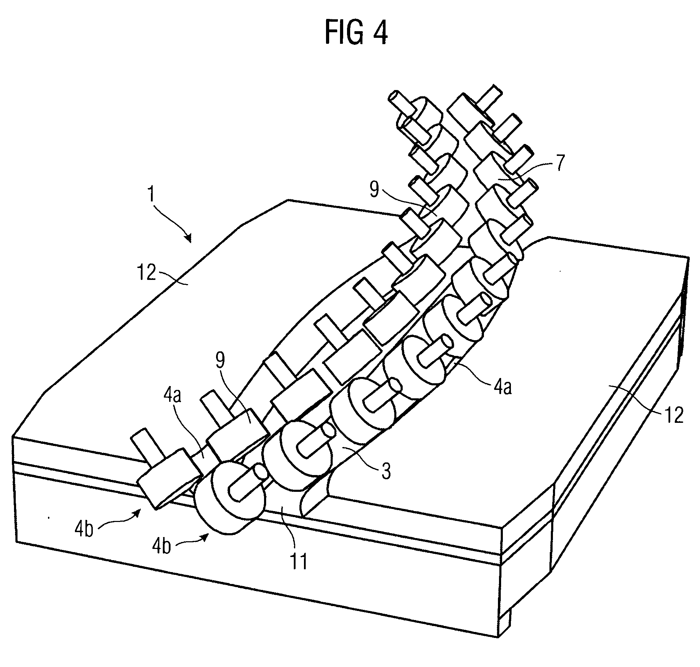

Figur 4 stellt in einer grob schematischen Darstellung das Antriebssystem der Behälter 1 aus der Figur 2 im Kurvenbereich einer Förderstrecke dar. Der Behälter 1 ist auch hier zur besseren Erkennbarkeit umgedreht, d.h. in der Zeichnungsfigur 4 blickt man auf die Unterseite des Behälters 1. Deutlich erkennbar sind die in zwei parallelen Reihen angeordneten Antriebs- und/oder Führungsrollen 7, 9, wobei die auf der (in der Zeichnung rechten Seite) an der Seitenfläche 4a der nutförmigen Vertiefung 3 anliegenden Antriebsrollen 7 den Behälter 1 vorwärts treiben. Die (in der Zeichnung auf der linken Seite angeordneten) Führungsrollen 9 liegen im Bereich der trichterförmigen Erweiterung 11 der nutförmigen Vertiefung 3 an und stellen sicher, dass die Führungsrollen 7 an die Seitenfläche 4a der nutförmigen Vertiefung 3 angedrückt werden.

In der Zeichnungsfigur 4 ist die Seitenfläche 4a (in der umgedrehten Gebrauchslage des Behälters) nach unten erweitert, d.h. die Seitenwände 4a sind aus der vertikalen nach außen geneigt, damit sich beim Durchleuchten des Behälters 1 die Kante nicht als Linie auf dem Beobachtungsschirm abbildet. Die Planenflächen 12 beidseitig der nutförmigen Vertiefung 3 dienen beim Transport des Behälters auf Rädern, Rollen oder dergleichen Fördermitteln als Auflage.

Die in den Figuren 2, 4 schematisch dargestellten Antriebsund/oder Führungsrollen 7, 9 sind vorzugsweise als Kegelräder ausgebildet, an die der Behälter 1 durch seine Gewichtskraft angepresst wird. Die Kegelräder sind mindestens teilweise angetrieben. Alle Kegelräder sind in Kurvenbereichen des Förderers entsprechend der Darstellung in Figur 4 angeordnet.

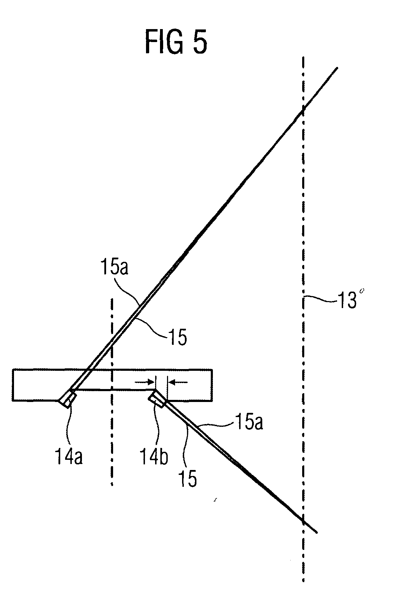

Wie in der geometrischen Darstellung der Figur 5 erkennbar gemacht, bewegt sich der Behälter 1 um die Achse 13 des Kurvenmittelpunktes in die Zeichnungsebene hinein und rollt dabei auf den Kegelrädern 14 ab. Um die Rollbedingungen in einer Rechtskurve zu erfüllen, ist das Kegelrad 14a nach unten geöffnet und das Kegelrad 14b nach oben geöffnet. Die Verlängerung der Kegelachsen 15 schneiden sich mit den Verlängerungen der Kegelflanken 15a in der Kurvenmittelpunktachse 13. Bei Linkskurven ist die Öffnung der Kegelräder 14 entgegen der Öffnungsrichtung bei einer Rechtskurve. Beim Befahren des Behälters 1 auf einer Geraden werden vorzugsweise zylindrische Räder 14 eingesetzt, um die Rollbedingungen für die Geradeausfahrt zu erfüllen. Die Kontur der Antriebs- und/oder Führungsrollen 7, 9 stellt eine genaue Führung sicher.

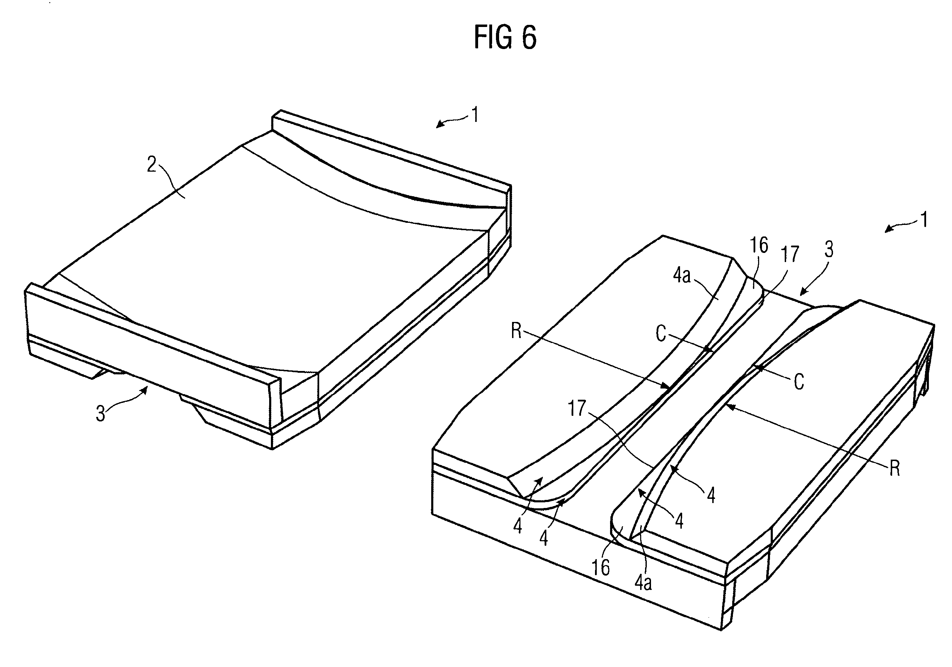

Alternativ zur Ausbildung der nutförmigen Vertiefung nach den Figuren 1 und 3 ist auch eine Ausbildung gemäß Figur 6 möglich. Der Behälter 1 ist ebenfalls in der Ansicht von oben (linke Zeichnungshälfte) und von unten (rechte Zeichnungshälfte) dargestellt. Erkennbar sind die Seitenflächen 4a der nutförmigen Vertiefung 3 mit mindestens einer in Längsrichtung der Nut verlaufenden Stufe 16 versehen, wobei jeweils die der Nutöffnung nahen Seitenflächenbereiche in dem dem Kurvenradius entsprechenden Radius R gekrümmt sind und die an den Nutgrund anschließenden Seitenflächebereiche 17 parallel zur Förderrichtung T verlaufen, wobei deren Abstand C der Breite der eingreifenden Führungs- und/oder Antriebsmittel 7, 9 entsprechend angepasst ist. Die beim Transport nach unten (in der Zeichnungsdarstellung nach oben) geöffneten symmetrischen Seitenwände 4a der nutförmigen Vertiefung 3 übernehmen die Führung und den Antrieb des Behälters 1 in der Kurvenfahrt durch Anlegen jeweils einer Seite der in einer Doppelreihe angeordneten Führungs- und/oder Antriebsrollen 7, 9, während die im Nutgrund vorgesehenen Seitenflächebereiche 17 die Führung des Behälters 1 bei Geradeausfahrt übernehmen.

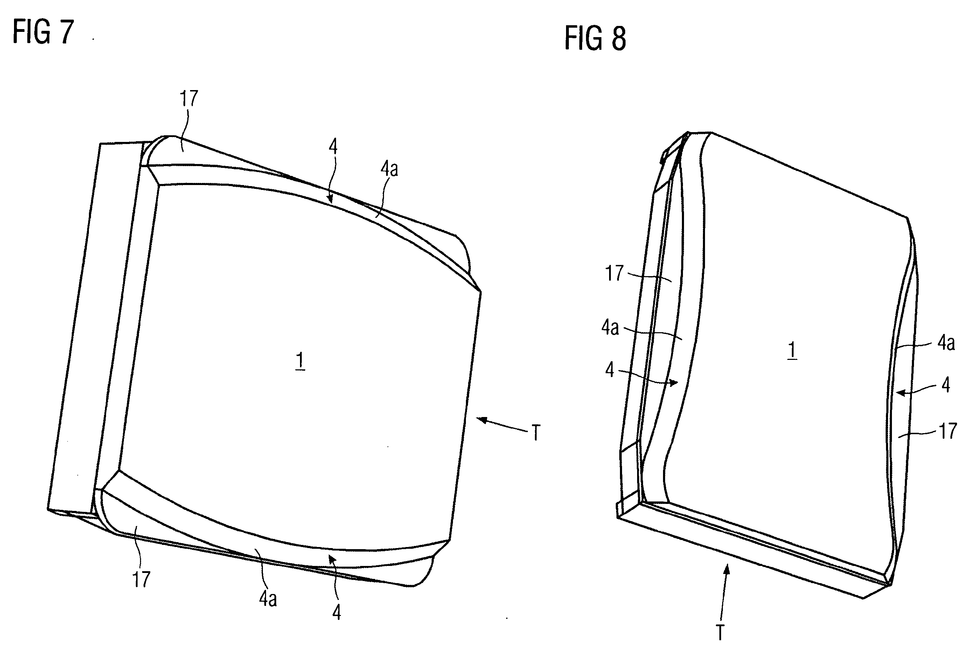

In den Figuren 7 und 8 sind zwei Behältervarianten dargestellt, die praktisch die nutförmige Vertiefung in der Mitte des Behälters kinematisch umkehrt. Die geneigten Seitenwände 4a zur Führung und zum Antrieb des Behälters 1 sind ebenso wie die abgestuften Seitenflächen 17 an der Außenseite beidseitig des Behälters 1 symmetrisch zueinander angeordnet, wobei in diesem Fall die Führungs- und/oder Antriebsrollen 7, 9 in entsprechendem Abstand voneinander beidseitig des Förderweges T angeordnet sind. Abhängig davon, welche der Rollen 7, 9 bei Kurvenfahrt den Antrieb übernehmen sind die gekrümmten Seitenflächen 4a konvex oder konkav geformt, so dass sich die Führungs- und/oder Antriebsrollen 7, 9 jeweils in der Innen- oder Außenseite der Kurve an den Behälter 1 anlegen. Auch hier liegt der Behälter 1 mit seinem planen Bodenbereich auf dem Förderer auf.

### Bezugszeichenliste

- 1: Behälter
- 2: Fläche
- 3: Vertiefung
- 4: Führungs- und/oder Antriebsflächen
- 4a: Seitenfläche
- 5: Bereich
- 6: Bereich
- 7: Antriebsrolle
- 8: Antriebsband
- 9: Führungsrolle
- 10: Bereich
- 11: trichterförmige Erweiterung
- 12: Bereich
- 13: Kurvenmittelpunktsachse
- 14: Kegelräder
- 14a: Kegelrad
- 14b: Kegelrad
- 15: Kegelachse
- 15a: Kegelflanke
- 15b: Kegelflanke
- 16: Stufe
- 17: Seitenflächebereich

- T: Transportrichtung
- R: Kurvenradius
- A: Abstand
- B: Abstand
- C: Abstand

## Patentansprüche

1. Behältertransportsystem zum Transport von Stückgut, insbesondere von Gepäckstücken, zwischen dem mindestens einem Aufgabe- und dem mindestens einem Abgabeort eines Behälterförderers, auf dem die einzelnen, zur Aufnahme der zu transportierenden Stückgutteile entsprechend geformten Behälter (1) aufliegend fortbewegbar sind,
**dadurch gekennzeichnet, dass**
jeder Behälter (1) vollständig aus einem formstabilen, abriebfesten, flammhemmenden und durchleuchtungsfähigen Kunststoff geformt ist und in dessen Unterseite in Transportrichtung (T) verlaufende Führungs- und/oder Antriebsflächen (4) eingeformt sind, die mit den Behälter (1) führenden und/oder antreibenden Führungs- und/oder Antriebsmitteln (4b) zusammenwirken.

2. Behältertransportsystem nach Anspruch 1,
**dadurch gekennzeichnet, dass**
die Führungs- und/oder Antriebsflächen (4) durch sich beidseitig der Behälterlängsmittelachse (14) spiegelsymmetrisch erstreckende, einander zugewandte Seitenflächen (4a) einer in den Behälterboden eingeformten nutförmigen Vertiefung (3) gebildet werden, an die die Führungs- und/oder Antriebsmittel (4a) mindestens bereichsweise anlegbar sind.

3. Behältertransportsystem nach Anspruch 1 und 2,
**dadurch gekennzeichnet, dass**
die Seitenflächen (4a) der nutförmigen Vertiefung (3) spiegelsymmetrisch in einem dem Kurvenradius (R) des Behälterförderers entsprechendem Radius derartig nach außen gekrümmt sind, dass deren größter Abstand in der Behältermitte liegt, und dass mindestens in Kurvenstrecken, Kreuzungsstrecken oder in Weichenbereichen am Behälterförderer vorgesehene Führungs- und/oder Antriebsmittel (4a), in die nutförmigen Vertiefung (3) eingreifend, an mindestens einer der Seitenflächen (4a) kraft- oder formschlüssig zur Anlage kommen.

4. Behältertransportsystem nach Anspruch 1 und 2,
**dadurch gekennzeichnet, dass**
die Seitenflächen (4a) der nutförmigen Vertiefung (3) spiegelsymmetrisch in einem dem Kurvenradius (R) entsprechendem Radius derartig nach innen gekrümmt sind, dass deren kleinster Abstand in der Behältermitte liegt, und dass mindestens in Kurvenstrecken, Kreuzungsstrecken oder in Weichenbereichen am Förderer Führungs- und/oder Antriebsmittel (4a) vorgesehene sind, die in die nutförmige Vertiefung (3) eingreifend an mindestens einer der Seitenflächen (4a) kraft- oder formschlüssig zur Anlage kommen.

5. Behältertransportsystem nach Anspruch 1 - 4,
**dadurch gekennzeichnet, dass**
der Abstand der Seitenflächen (4a) in den in Transportrichtung (T) vorderen und hinteren Bereichen (5, 6) der nutförmigen Vertiefung (3) der Breite der eingreifenden Führungs- und/oder Antriebsmittel (4a) angepasst ist, wobei die nutförmige Vertiefung (3) beidseitig nach außen stufenlos trichterförmig erweitert ist.

6. Behältertransportsystem nach einem der Ansprüche 1 - 5,
**dadurch gekennzeichnet, dass**
die Seitenflächen (4a) der nutförmigen Vertiefung (3) senkrecht zur Bodenfläche des Behälters (1) verlaufen.

7. Behältertransportsystem nach einem der Ansprüche 1 - 6,
**dadurch gekennzeichnet, dass**
die Seitenflächen (4a) der nutförmigen Vertiefung (3) spiegelsymmetrisch derart gegeneinander geneigt sind, dass sich die nutförmigen Vertiefung (3) nach unten aufweitet.

8. Behältertransportsystem nach einem der Ansprüche 1 - 7,
**dadurch gekennzeichnet, dass**
die Oberfläche des Behälters (1) zur Aufnahme des Stückgutes symmetrisch zur Behälterlängsachse (14) muldenförmig nach unten gekrümmt ist.

9. Behältertransportsystem nach einem der Ansprüche 1 - 8,
**dadurch gekennzeichnet, dass**
jede Seitenfläche (4a) der nutförmigen Vertiefung (3) mit mindestens einer in Längsrichtung der Nut verlaufenden Stufe (16) versehen ist, wobei jeweils die der Nutöffnung nahen Seitenflächenbereiche (17) in dem dem Kurvenradius (R) entsprechendem Radius gekrümmt sind und die an den Nutgrund anschließenden Seitenflächebereiche (17) parallel zur Förderrichtung verlaufen, wobei deren Abstand der Breite der eingreifenden Führungs- und/oder Antriebsmittel (4a) angepasst ist.

10. Behältertransportsystem nach einem der Ansprüche 1 - 9,
**dadurch gekennzeichnet, dass**
die Führungs- und/oder Antriebsmittel (4a) fliegend gelagerte und in die Nut eingreifende Kegel- oder Zylinderrollen sind, die in Förderrichtung hintereinander in mindestens einer Reihe angeordnet sind, wobei jede Rolle (7, 9) an mindestens einer der Seitenwände (13) der nutförmigen Vertiefung (3) anlegbar ist.

11. Behältertransportsystem nach einem der Ansprüche 1 - 10,
**dadurch gekennzeichnet, dass**
in der Kurve des Förderers die in die nutförmige Vertiefung (3) eingreifenden Kegel- oder Zylinderrollen auf einem Kreisbahnabschnitt angeordnet sind, dessen Radienmittelpunkt auf der gemeinsamen Achse (15) liegt, die durch den Radienmittelpunkt der Kurve und den Radienmittelpunkt einer Seitenflächen (4a) der nutförmigen Vertiefung (3) verläuft.

12. Behältertransportsystem nach Anspruch 11,
**dadurch gekennzeichnet, dass**
die Führungs- und/oder Antriebsmittel (4a) in einer Kurve des Förderers aus in zwei Reihen angeordneten Kegelrädern bestehen, die derartig angeordnet sind, das sich die Verlängerungen der Kegelachsen (15) aller Kegelräder (14a, 14b) einer Reihe und die Verlängerungen der Kegelflanken (15a, 15b) in jeweils einem Punkt schneiden, der wie der Schnittpunkt der Kegelräder (14a, 14b) der anderen Reihe auf der gemeinsamen Kurvenmittelpunktsachse (13) liegt.

13. Behälter in einem Behältertransportsystem nach einem der Ansprüche 1 bis 12,
**dadurch gekennzeichnet, dass**
die Führungs- und/oder Antriebsmittel (4) in einer Kurve des Förderers aus in zwei Reihen angeordneten Rollen (7, 9) besteht, deren Mantellinien jeweils einer Rollenreihe auf einer Kreisbahn liegen, die parallel zu mindestens einer der Seitenwände (13) verläuft, wobei mindestens eine der Reihen von Rollen (7, 9) von einem Antriebsband (8) umschlungen ist, welches an einer der Seitenwände (13) anlegbar ist, während die andere Reihe der Rollen (7, 9) mindestens bereichsweise im Kontakt mit der gegenüberliegenden Seitenwand (4a) steht.

14. Behälter in einem Behältertransportsystem nach einem der Ansprüche 1 bis 13,
**dadurch gekennzeichnet, dass**
das Gehäuse des Behälters (1) mindestens einen geschlossenen Hohlraum aufweist.

15. Behälter in einem Behältertransportsystem nach Anspruch 14,
**dadurch gekennzeichnet, dass**
der Hohlraum des Behälters (1) ausgeschäumt ist.

16. Behälter in einem Behältertransportsystem nach Anspruch 14 oder 15,
**dadurch gekennzeichnet, dass**
der Hohlraum des Behälters (1)mit einem Feuerlöschmittel gefüllt ist.

17. Behälter in einem Behältertransportsystem nach einem der Ansprüche 1 - 16,
**dadurch gekennzeichnet, dass**
an den Außenkanten des Behälters (1) Metallelemente angeordnet sind, die mit an der Förderstrecke installierten induktiven Näherungssensoren zusammenwirken.

18. Behälter (1) in einem Behältertransportsystem nach einem der Ansprüche 1 - 16,
**dadurch gekennzeichnet, dass**
zur Identifizierung des Behälters (1) im Behältertransportsystem Transponder vorgesehen sind, die außerhalb des Sichtbereiches der Durchleuchtungssysteme in den Behälter (1) eingelassen sind.

19. Behälter (1) in einem Behältertransportsystem nach Anspruch 18,
**dadurch gekennzeichnet, dass**
die Transponder durch eine Metallabdeckung gegen Röntgenstrahlung abgedeckt sind.
